# EUROPÄISCHE PATENTSCHRIFT

(11) **EP 1 419 197 B1**
(45) Veröffentlichungstag und Bekanntmachung des Hinweises auf die Patenterteilung: **03.11.2004**
(21) Anmeldenummer: 02758467.1
(22) Anmeldetag: 14.08.2002
(51) Int. Cl.: C08L 83/04, C08K 5/58, C08K 5/5455

(54) **VERNETZBARE MASSEN AUF DER BASIS VON ORGANOSILICIUMVERBINDUNGEN**
CROSSLINKABLE COMPOUNDS ON THE BASIS OF ORGANOSILIC COMPOUNDS
MATIERES RETICULABLES A BASE DE COMPOSES ORGANO-SILICIUM

(30) Priorität: 23.08.2001 DE 10141237
(43) Veröffentlichungstag der Anmeldung: 19.05.2004
(73) Patentinhaber: Wacker-Chemie GmbH, 81737 München (DE)
(72) Erfinder: ZICHE, Wolfgang, 01665 Diera (DE); SCHEIM, Uwe, 01640 Coswig (DE)
(86) Internationale Anmeldenummer: PCT/EP2002/009143
(87) Internationale Veröffentlichungsnummer: WO 2003/018691

(56) Entgegenhaltungen:
- EP-A- 1 108 752
- US-A- 5 981 685

## Beschreibung

Die Erfindung betrifft insbesondere bei Raumtemperatur vernetzbare Massen auf der Basis von Organosiliciumverbindungen, z.B. sogenannte RTV-1-Massen, unter Verwendung spezieller Zinnkatalysatoren sowie ein Verfahren zur Herstellung derartiger Massen.

Die Verwendung von Dialkylzinn(IV)-Verbindungen als Kondensationskatalysatoren in RTV-1- und RTV-2-Siliconkautschuken ist allgemein bekannt. In RTV-1-Alkoxymassen haben diese Zinnverbindungen allerdings den Nachteil, dass Sie die unerwünschte Spaltung der Siloxanketten durch Alkoholreste ("Äquilibrierung") ebenfalls katalysieren, wobei nicht mehr vernetzungsfähige Alkoxyendgruppen der Polysiloxankette entstehen und damit eine ausreichende Vernetzung der Masse nicht mehr möglich ist; d.h. dass bei der bestimmungsgemäßen Verwendung kein oder kein ausreichend stabiles Vulkanisat erhalten wird. Die Lagerstabilität, angegeben als Zeitdauer, welche die RTV-1-Masse gelagert werden kann, ohne ihre Eigenschaften merklich zu verlieren, wird durch die Äquilibrierung drastisch verringert.

Die Methoden der Wahl zur Verlängerung der Lagerstabilität bestehen bisher in
- Ersatz des Zinnkatalysators durch einen Titankatalysator. Der Nachteil hier besteht in der Gelbfärbung der Massen, wodurch nur gedeckte, aber keine transluzenten Massen möglich sind.
- Verringerung der Menge des Zinnkatalysators.
- Verwendung von weniger aggressiven Zinnkatalysatoren, etwa Zinn-Chelatkatalysatoren. Ein Überschuss an Chelatverbindung wie z.B. Acetylacetonat ist notwendig; Diese ist jedoch flüchtig, toxikologisch bedenklich und gesundheitsgefährdend.
- Zusatz von Alkoholfängern, sog. Scavengern, die sich auf Grund ihrer hohen Reaktivität mit Alkoholen umsetzen. Dieser Zusatz ist allerdings kostenaufwendig und verschlechtert im allgemeinen das Haftungsverhalten.

Bekannt sind mit Sulfonsäure blockierte Dialkyldiacylzinnkatalysatoren für Polyurethane, wobei die Aktivierung über Amine erfolgt. Hierzu sei beispielsweise auf US-A 5 849 864 bzw. WO99/11369, Ashland Chemical Company verwiesen.
RTV-2-Härter auf Organozinnbasis (Katalysator-Vernetzer-Kompositionen) sind in DE-A 195 27 101 beschrieben, die auch organische Säuren als Reaktionszeitregler enthalten können, wobei die Reaktionszeitregler die Reaktivität der beanspruchten Katalysator-Vernetzer-Kompositionen verbessern sollen.

Die Anwendung von Sn-O-SO₂R-haltigen Verbindungen, die beispielsweise aus Alkylzinnoxiden und Sulfonsäuren hergestellt werden können, in u.a. kondensationsvernetzenden Polymersystemen ist beschrieben. Hierzu sei z.B. auf US-A 3,095,434 und USA 5,981,685 verwiesen. In den Beispielen nicht beschrieben wird die Verwendung der beanspruchten Katalysatoren mit Sn-Sulfonat-Einheiten für RTV-Silikonsysteme. Nicht beschrieben werden speziell Alkoxy-RTV-1-Systeme mit ihren spezifischen Problemen bezüglich der Lagerstabilität und der Notwendigkeit cokatalysierender Zusätze.
In EP-A 623 642 wird zur Stabilisierung von RTV-1-Acetoxymassen der Zusatz von Säuren, auch Sulfonsäuren, beschrieben, wenn die enthaltenen Polymere durch anionische Cyclenpolymerisation hergestellt worden sind und zur Neutralisation der basischen Polymerisationskatalysatoren z.B. Phosphorsäure verwendet wurde und die Massen somit z.B. Alkaliphosphate enthalten.
Der Einsatz von Reaktionsprodukten von Sulfonsäuren mit Aminen oder basischen Füllstoffen ist in gefüllten RTV-Systemen bekannt, um die Dispergierung der Füllstoffe zu erleichtern und um ein niedermoduliges Elastomer zu erhalten. Hierzu sei z.B. auf US-A 5,073,586 und US-A 5,118,738 verwiesen.
Schließlich wird in US-A 5,425,947 beschrieben, dass RTV-Massen, die carbonsäureanhydridhaltige Polymere als rheologische Additive enthalten, als zusätzlichen modulerniedrigenden Zusatz Sulfonsäuren enthalten können.

Gegenstand der Erfindung sind vernetzbare Massen auf der Basis von Organosiliciumverbindungen mit mindestens zwei hydrolysierbaren Gruppen, dadurch gekennzeichnet, dass als Katalysator mindestens eine Organozinnverbindung (C) enthaltend Einheiten der Formel

RₐR¹ _{b}(XR³)_{c}SnX_{(4-a-b-c)/2} (I)

sowie
basischen Stickstoff aufweisende Verbindungen (D)
enthalten ist, wobei
R gleich oder verschieden sein kann und einwertige, gegebenenfalls substituierte Kohlenwasserstoffreste, die durch Sauerstoffatome unterbrochen sein können, bedeutet,
X gleich oder verschieden sein kann und -O- oder -S- bedeutet,
R¹ gleich oder verschieden sein kann und die Bedeutung von -OS(=O)₂R² hat,
R² gleich oder verschieden sein kann und über Stickstoff gebundene Aminreste, einwertige, gegebenenfalls substituierte Kohlenwasserstoffreste, die durch -S(=O)₂- unterbrochen sein können, oder Reste -OR⁴ mit R⁴ gleich der für R³ angegebenen Bedeutung ist,
R³ gleich oder verschieden sein kann und Wasserstoffatom oder einwertige, gegebenenfalls substituierte Kohlenwasserstoffreste, die durch Sauerstoffatome unterbrochen sein können, bedeutet,
a 0, 1, 2 oder 3 ist,
b 0, 1, 2 oder 3 ist,
c 0, 1, 2 oder 3 ist,
mit der Maßgabe, dass die Summe a+b+c≤4 ist und die Organozinnverbindung mindestens einen Rest R¹ aufweist.

Bei den erfindungsgemäß eingesetzten Organozinnverbindungen kann es sich sowohl um Stannane handeln, d.h. Verbindungen der Formel (I) mit a+b+c=4, als auch um oligomere oder polymere Zinnverbindungen, wie z.B. Stannoxane, d.h. Verbindungen enthaltend Einheiten der Formel (I) mit a+b+c≤3. Vorzugsweise handelt es sich bei den erfindungsgemäß eingesetzten Organozinnverbindungen um solche, die aus Einheiten der Formel (I) bestehen.

Bevorzugt handelt es sich bei Rest R um Kohlenwasserstoffreste mit 1 bis 18 Kohlenstoffatomen, besonders bevorzugt um Alkylreste mit 1 bis 12 Kohlenstoffatomen, insbesondere um den n-Butyl- und den n-Octylrest.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Beispiele für substituierte Reste R sind Methoxyethyl-, Ethoxyethyl- und der Ethoxyethoxyethylrest.

Bevorzugt handelt es sich bei X um Sauerstoffatom.

Bevorzugt handelt es sich bei Rest R² um gegebenenfalls mit -SO₃H substituierte Kohlenwasserstoffreste mit 1 bis 40 Kohlenstoffatomen, die mit -S(=O)₂- unterbrochen sein können, besonders bevorzugt um Alkyl- und Arylreste mit 1 bis 40 Kohlenstoffatomen, insbesondere um alkylsubstituierte Arylreste mit 7 bis 40 Kohlenstoffatomen.

Beispiele für Reste R² sind die für R genannten Beispiele sowie -NH₂, -C₆H₄-SO₃H und -C₄H₈-SO₃H.

Bevorzugt handelt es sich bei Rest R³ um Wasserstoffatom sowie gegebenenfalls mit Alkoxyresten und/oder Aminoresten substituierte Kohlenwasserstoffreste mit 1 bis 18 Kohlenstoffatomen, besonders bevorzugt um Alkyl- und Arylreste mit 1 bis 18 Kohlenstoffatomen, insbesondere um den Methyl- und Ethylrest.

Beispiele für Reste R³ sind die für R genannten Beispiele sowie den Methoxyethyl-, Ethoxyethyl-, Methoxyethoxyethyl-, Aminoethoxyethyl- und Aminopropylrest.

Bevorzugt handelt es sich bei den erfindungsgemäß eingesetzten Katalysatoren (C) um Stannane der Formel (I) oder um lineare Stannoxane aus Einheiten der Formel (I).

Beispiele für erfindungsgemäß eingesetzten Katalysatoren (C) sind Oct₂Sn (OEt) (OSO₂-C₆H₄-CH₃), Bu₂Sn(OSO₂-C₆H₄-CH₃)₂, Oct₂Sn(OCH₃)-O-SnOct₂(OSO₂-C₆H₄-C₁₂H₂₃) und [Bu₂Sn(OSO₂-C₆H₄-C₁₂H₂₃)]₂O, wobei Bu₂Sn(OSO₂-C₆H₄-CH₃)₂, Oct₂Sn(OCH₃)-O-SnOct₂(OSO₂-C₆H₄-C₁₂H₂₃) und [Bu₂Sn(OSO₂-C₆H₄-C₁₂H₂₃)]₂O bevorzugt und Oct₂Sn(OCH₃)-O-SnOct₂(OSO₂-C₆H₄-C₁₂H₂₃) sowie [Bu₂Sn(OSO₂-C₆H₄-C₁₂H₂₃)]₂O besonders bevorzugt sind mit Et gleich Ethylrest, Bu gleich n-Butylrest und Oct gleich n-Octylrest.

Die erfindungsgemäß eingesetzten Organozinnverbindungen enthaltend Einheiten der Formel (I) sind handelsübliche Produkte bzw. können nach in der organischen Chemie bekannten Verfahren hergestellt werden, wie etwa durch Umsetzung der entsprechenden Organozinnverbindungen mit Sulfonsäuren oder Sulfonsäurederivaten. Hierzu sei beispielsweise auf F. Thunecke, R. Borsdorf J. *Prakt. Chem.,* 333(1991), 489-494 und A.G. Davies *Organotin Che*mistry, VCH Verlagsgesellschaft, Weinheim, 1997, Kapitel 11.4 verwiesen.

Die Darstellung der erfindungsgemäßen Katalysatoren (C) ist auch in situ durch direkte Zugabe der Edukte zu den übrigen Komponenten der vernetzbaren Massen möglich, was zum Offenbarungsgehalt der vorliegenden Erfindung zu zählen ist, jedoch nicht bevorzugt ist. Falls die erfindungsgemäßen Katalysatoren (C) in situ hergestellt werden sollen, ist es bevorzugt, dass basische Komponenten erst nach der in situ Reaktion der Zinnverbindung und der Sulfonsäure zugegeben werden.

Bei den basischen Stickstoff aufweisenden Verbindungen (D) kann es sich um Amine, stickstoffhaltige Heterocyclen oder aminofunktionelle Organosiliciumverbindungen handeln, wobei letztere bevorzugt sind.

Beispiele für aminofunktionelle Organosiliciumverbindungen (D) sind basischen Stickstoff aufweisende Silane, basischen Stickstoff aufweisende Organosiloxane, wie etwa solche der Formel (II), bei denen mindestens ein Rest R⁶ die Bedeutung von mit Aminogruppen substituiertem Kohlenwasserstoffrest hat.

Bei den basischen Stickstoff aufweisenden Organosiliciumverbindungen (D) handelt es sich bevorzugt um solche der Formel

(R⁹O)_{4-g} SiR¹⁰ _{g} (IV),

wobei
R⁹ gleich oder verschieden sein kann und eine der oben für R³ angegebenen Bedeutungen hat,
R¹⁰ gleich oder verschieden sein kann und einwertige, basischen Stickstoff aufweisende, gegebenenfalls substituierte Kohlenwasserstoffreste bedeutet und
g 1, 2, 3 oder 4 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der Formel (IV), wie auch um Teilcohydrolysate, d.h. Teilhydrolysate von mindestens zwei verschiedenen Arten von Organosiliciumverbindungen der Formel (IV).

Handelt es sich bei den in den erfindungsgemäßen Massen eingesetzten Verbindung (D) um Teilhydrolysate von Organosiliciumverbindungen der Formel (IV), so sind solche mit bis zu 6 Siliciumatomen bevorzugt.

Beispiele für Rest R⁹ sind die oben für Rest R³ genannten Beispiele. Bevorzugt handelt es sich bei Rest R⁹ um Wasserstoffatom und Alkylreste, besonders bevorzugt um Wasserstoffatom und Alkylreste mit 1 bis 4 Kohlenstoffatomen, insbesondere um Wasserstoffatom, den Methyl- und den Ethylrest.

Beispiele für Reste R¹⁰ sind Aminomethyl-, 1-Aminoethyl-, 3-Aminopropyl-, 3-(2-Aminoethyl)-aminopropyl-, Aminoethylaminoethylaminopropyl- und Cyclohexylaminopropylrest.

Bevorzugt handelt es sich bei Rest R¹⁰ um 3-Aminopropyl-, 3-(2-Aminoethyl)-aminopropyl-, Aminoethylaminoethylaminopropyl- und Cyclohexylaminopropylrest, wobei der 3-Aminopropyl- und 3-(2-Aminoethyl)-aminopropylrest besonders bevorzugt sind.

Beispiele für erfindungsgemäß eingesetzte, basischen Stickstoff aufweisende Verbindungen (D) sind 3-Aminopropyltrimethoxysilan, 3-Aminopropyltriethoxysilan, 3-(2-Aminoethylamino)propyltrimethoxysilan, 3-(2-Aminoethylamino)propyltriethoxysilan, 3-(N,N-Diethyl-2-aminoethylamino)propyltrimethoxysilan, 3-(N,N-Diethyl-2-aminoethylamino)propyltriethoxysilan, 3-(Cyclohexylamino)propyltrimethoxysilan, 3-(Cyclohexylamino)propyltriethoxysilan, Aminomethyltrimethoxysilan sowie Teilhydrolysate der genannten alkoxyfunktionellen Organosiliciumverbindungen.

Die erfindungsgemäß eingesetzten Verbindungen (D) sind handelsübliche Produkte bzw. können nach in der organischen Chemie bekannten Verfahren hergestellt werden.

Die erfindungsgemäßen Massen können neben den erfindungsgemäß als Kondensationskatalysatoren eingesetzten Zinnverbindungen (C) und basischen Stickstoff aufweisende Verbindungen (D) alle Komponenten enthalten, die auch bisher zur Herstellung von,bei Raumtemperatur vernetzbaren Organopolysiloxanmassen eingesetzt wurden. Bei den hydrolysierbaren Gruppen, welche die eingesetzten, an der Vernetzungsreaktion beteiligten Organosiliciumverbindungen aufweisen können, kann es sich um beliebige Gruppen handeln, wie Acetoxy-, Oximato- und Organyloxygruppen, insbesondere Alkoxyreste, wie Ethoxyreste, Alkoxyethoxyreste und Methoxyreste. Ferner kann es sich bei den Organosiliciumverbindungen sowohl um Siloxane (≡Si-O-Si≡ -Strukturen) als auch um Silcarbane (≡Si-R'-Si≡ -Strukturen mit R' gleich einem zweiwertigen, gegebenenfalls substituierten oder mit Heteroatomen unterbrochenen Kohlenwasserstoffrest) oder deren Copolymere handeln.

Bevorzugt handelt es sich bei den erfindungsgemäßen vernetzbaren Massen um solche, die
(A) Organopolysiloxane mit mindestens zwei hydrolysierbaren Resten, ausgewählt aus Acetoxy-, Oximato- und Organyloxygruppen, gegebenenfalls
(B) Vernetzer mit mindestens drei hydrolysierbaren Resten, ausgewählt aus Acetoxy-, Oximato- und Organyloxygruppen, und/oder deren Teilhydrolysate,
(C) Organozinnverbindung enthaltend Einheiten der Formel (I) und
(D) basischen Stickstoff aufweisende Verbindungen (D) enthalten.

Bei den erfindungsgemäß eingesetzten Organopolysiloxanen mit mindestens zwei hydrolysierbaren Gruppen (A) handelt es sich vorzugsweise um solche der allgemeinen Formeln

(R⁵O)_{3-d}R⁶ _{d}SiO- [R⁶ ₂SiO]ₑ-SiR⁶ _{d}(OR⁵)_{3-d} (II),

wobei
d 0, 1 oder 2 ist,
R⁶ gleiche oder verschiedene SiC-gebundene Kohlenwasserstoffreste mit 1 bis 18 Kohlenstoffatomen, die gegebenenfalls mit Halogenatomen, Ethergruppen, Estergruppen, Epoxygruppen, Mercaptogruppen, Cyanogruppen, Aminogruppen oder (Poly)glykolresten substituiert sind, wobei letztere aus Oxyethylen- und/oder Oxypropyleneinheiten aufgebaut sind, bedeutet und
R⁵ gleich oder verschieden sein kann und eine für R³ angegebene Bedeutung hat,
e eine ganze Zahl von 10 bis 10 000, bevorzugt 100 bis 3 000, besonders bevorzugt 400 bis 2 000, ist,
mit der Maßgabe, dass d nur bei R⁵ gleich Wasserstoffatom den Wert 2 haben kann.

Beispiele für Reste R⁶ sind die für Rest R oben angegebenen Beispiele.

Bevorzugt handelt es sich bei Rest R⁶ um Alkylreste, besonders bevorzugt um Alkylreste mit 1 bis 4 Kohlenstoffatomen, insbesondere um den Methylrest.

Beispiele für Reste R⁵ sind die für Rest R³ oben angegebenen Beispiele.

Bevorzugt handelt es sich bei Rest R⁵ um Wasserstoffatom und Alkylreste, besonders bevorzugt um Wasserstoffatom und Alkylreste mit 1 bis 4 Kohlenstoffatomen, insbesondere um Wasserstoffatom, den Methyl- und den Ethylrest.

Der durchschnittliche Wert für die Zahl e in Formel (II) ist vorzugsweise so gewählt, dass das Organopolysiloxan der Formel (II) eine Viskosität von 1000 bis 2 500 000 mPa·s, besonders bevorzugt von 4000 bis 800 000 mPa·s, jeweils gemessen bei einer Temperatur von 25°C, besitzt.

Obwohl in Formel (II) nicht angegeben bzw. aus der Bezeichnung Diorganopolysiloxan nicht entnehmbar, können bis zu 10 Molprozent der Diorganosiloxaneinheiten durch andere Siloxaneinheiten, wie R⁶₃SiO_{½}-, R₆SiO_{3/2}- und SiO_{4/2}-Einheiten, ersetzt sein, wobei R⁶ die vorstehend dafür angegebene Bedeutung hat.

Beispiele für die in den erfindungsgemäßen Massen eingesetzten Organopolysiloxane mit mindestens zwei Organyloxyresten an einer jeden Endgruppe (A) sind

(MeO)₂MeSiO [SiMe₂O] ₂₀₀₋₂₀₀₀SiMe (OMe)₂,

(EtO)₂MeSiO [SiMe₂O]₂₀₀₋₂₀₀₀SiMe (OEt)₂,

(MeO) ₂ViSiO[SiMe₂O]₂₀₀₋₂₀₀₀SiVi(OMe)₂ und

(EtO) ₂ViSiO[SiMe₂O]₂₀₀₋₂₀₀₀SiVi(OEt)₂,

wobei Me Methylrest, Et Ethylrest und Vi Vinylrest bedeutet.

Die in den erfindungsgemäßen Massen eingesetzten Organosiliciumverbindungen mit mindestens zwei hydrolysierbaren Gruppen (A) sind handelsübliche Produkte bzw. können nach in der Siliciumchemie bekannten Verfahren, beispielsweise durch Umsetzung von α,ω-Dihydroxypolyorganosiloxanen mit den entsprechenden Organyloxysilanen, hergestellt werden.

Bei den in den erfindungsgemäßen Massen gegebenenfalls eingesetzten Vernetzern (B) kann es sich um beliebige, bisher bekannte Vernetzer mit mindestens drei hydrolysierbaren Resten handeln, wie beispielsweise Silane oder Siloxane mit mindestens drei Organyloxygruppen.

Bei den in den erfindungsgemäßen Massen gegebenenfalls eingesetzten Vernetzern (B) handelt es sich vorzugsweise um Organosiliciumverbindungen der Formel

(R⁷O)_{4-f}SiR⁸ _{f} (III),

wobei
R⁷ gleich oder verschieden sein kann und eine der oben für R³ angegebenen Bedeutungen hat,
R⁸ eine oben für R genannte Bedeutung besitzt und
f 0 oder 1 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der Formel (III), wie auch um Teilcohydrolysate, d.h. Teilhydrolysate von mindestens zwei verschiedenen Arten von Organosiliciumverbindungen der Formel (III).

Handelt es sich bei den in den erfindungsgemäßen Massen gegebenenfalls eingesetzten Vernetzern (B) um Teilhydrolysate von Organosiliciumverbindungen der Formel (III), so sind solche mit bis zu 6 Siliciumatomen bevorzugt.

Beispiele für Rest R⁷ sind die oben für Rest R³ genannten Beispiele. Bevorzugt handelt es sich bei Rest R⁷ um Wasserstoffatom und Alkylreste, besonders bevorzugt um Wasserstoffatom und Alkylreste mit 1 bis 4 Kohlenstoffatomen, insbesondere um Wasserstoffatom, den Methyl- und den Ethylrest.

Beispiele für Rest R⁸ sind die oben für Rest R genannten Beispiele, wobei Kohlenwasserstoffreste mit 1 bis 12 Kohlenstoffatomen bevorzugt und der Methyl- und der Vinylrest besonders bevorzugt sind.

Besonders bevorzugt handelt es sich bei den in den erfindungsgemäßen Massen gegebenenfalls eingesetzten Vernetzern (B) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 3-Cyanopropyltrimethoxysilan, 3-Cyanopropyltriethoxysilan, 3-(Glycidoxy)propyltriethoxysilan, 1,2-Bis-(trimethoxysilyl)ethan, 1,2-Bis(triethoxysilyl)ethan sowie Teilhydrolysate der genannten alkoxyfunktionellen Organosiliciumverbindungen, wie z.B. Hexaethoxydisiloxan.

Die in den erfindungsgemäßen Massen gegebenenfalls eingesetzten Vernetzer (B) sind handelsübliche Produkte bzw. können nach in der Siliciumchemie bekannten Verfahren hergestellt werden.

Falls die erfindungsgemäßen Massen Vernetzer (B) enthalten, handelt es sich um Mengen von vorzugsweise 0,01 bis 20 Gewichtsteilen, besonders bevorzugt 0,5 bis 10 Gewichtsteilen, insbesondere 1,0 bis 5,0 Gewichtsteilen, jeweils bezogen auf 100 Gewichtsteile Organopolysiloxan (A). Auf die Zugabe von Vernetzer (B) kann u.a. verzichtet bzw. die Menge reduziert werden, wenn z.B. als Komponente (D) Verbindungen mit mindestens drei hydrolysierbaren Gruppen eingesetzt werden.

Die erfindungsgemäßen Massen enthalten Katalysator (C) in Mengen von bevorzugt 0,001 bis 5 Gewichtsprozent, besonders bevorzugt 0,05 bis 3 Gewichtsprozent, insbesondere 0,1 bis 1 Gewichtsprozent, jeweils bezogen auf 100 Gewichtsteile Organopolysiloxan (A).

Die erfindungsgemäßen Massen enthalten Komponente (D) in Mengen von bevorzugt 0,001 bis 6 Gewichtsprozent, besonders bevorzugt 0,5 bis 4 Gewichtsprozent, insbesondere 1 bis 3 Gewichtsprozent, jeweils bezogen auf 100 Gewichtsteile Organopolysiloxan (A).

Zusätzlich zu den oben beschriebenen Komponenten (A), (B), (C) und (D) können die erfindungsgemäßen Massen nun weitere Stoffe, wie Weichmacher (E), Füllstoffe (F), Haftvermittler (G) und Additive (H) enthalten, wobei die zusätzlichen Stoffe (E) bis (H) die gleichen sein können, die auch bisher in unter Ausschluss von Feuchtigkeit lagerfähige und bei Zutritt von Feuchtigkeit vernetzbaren Massen eingesetzt worden sind.

Beispiele für Weichmacher (E) sind bei Raumtemperatur flüssige, durch Trimethylsiloxygruppen endblockierte Dimethylpolysiloxane, insbesondere mit Viskositäten im Bereich zwischen 50 und 1000 mPa·s, sowie hochsiedende Kohlenwasserstoffe, wie zum Beispiel Paraffinöle.

Die erfindungsgemäßen Massen enthalten Weichmacher (E) in Mengen von vorzugsweise 0 bis 300 Gewichtsteilen, besonders bevorzugt 10 bis 200 Gewichtsteilen, insbesondere 20 bis 100 Gewichtsteilen, jeweils bezogen auf 100 Gewichtsteile Organopolysiloxan (A).

Beispiele für Füllstoffe (F) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Falls Füllstoffe (E) eingesetzt werden, handelt es sich bevorzugt um hydrophile pyrogene Kieselsäure und stearinsäurebelegte Kreide.

Die erfindungsgemäßen Massen enthalten Füllstoffe (F) in Mengen von vorzugsweise 0 bis 300 Gewichtsteilen, besonders bevorzugt 1 bis 200 Gewichtsteilen, insbesondere 5 bis 200 Gewichtsteilen, jeweils bezogen auf 100 Gewichtsteile Organopolysiloxan (A).

Beispiele für die in den erfindungsgemäßen Massen eingesetzten Haftvermittler (G) sind Silane und Organopolysiloxane mit funktionellen Gruppen, wie beispielsweise solche mit Glycidoxypropyl- oder Methacryloxypropylresten sowie Tetraalkoxysilane. Falls jedoch bereits eine andere Komponente, wie etwa Siloxan (A) oder Vernetzer (B), die genannten funktionellen Gruppen aufweist, kann auf einen Zusatz von Haftvermittler verzichtet werden.

Die erfindungsgemäßen Massen enthalten Haftvermittler (G) in Mengen von vorzugsweise 0 bis 50 Gewichtsteilen, besonders bevorzugt 1 bis 20 Gewichtsteilen, insbesondere 1 bis 10 Gewichtsteilen, jeweils bezogen auf 100 Gewichtsteile Organopolysiloxan (A).

Beispiele für Additive (H) sind Pigmente, Farbstoffe, Riechstoffe, Fungicide, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel, wie beispielsweise Phosphorsäureester, und organischen Lösungsmittel, wie Alkylaromaten.

Die erfindungsgemäßen Massen enthalten Additive (H) in Mengen von vorzugsweise 0 bis 100 Gewichtsteilen, besonders bevorzugt 0 bis 30 Gewichtsteilen, insbesondere 0 bis 10 Gewichtsteilen, jeweils bezogen auf 100 Gewichtsteile Organopolysiloxan (A).

Besonders bevorzugt handelt es sich bei den erfindungsgemäßen Massen um solche, die
(A) Diorganopolysiloxan der Formel (II), gegebenenfalls
(B) Vernetzer der Formel (III) und/oder deren Teilhydrolysate,
(C) Organozinnverbindung enthaltend Einheiten der Formel (I) und
(D) basischen Stickstoff aufweisende Verbindung der Formel (IV)
enthalten.

Insbesondere handelt es sich bei den erfindungsgemäßen Massen um solche, die aus
(A) 100 Gewichtsteilen Polydiorganosiloxan der Formel (II),
(B) 0,01 bis 20 Gewichtsteilen Vernetzer der Formel (III) und/oder deren Teilhydrolysate,
(C) 0,05 bis 3 Gewichtsteilen Organozinnverbindung enthaltend Einheiten der Formel (I),
(D) 0,01 bis 4 Gewichtsteilen basischen Stickstoff aufweisende Verbindung der Formel (IV),
(E) 0 bis 300 Gewichtsteilen Weichmacher,
(F) 0 bis 300 Gewichtsteilen Füllstoffe,
(G) 0 bis 50 Gewichtsteilen Haftvermittler und
(H) 0 bis 100 Gewichtsteilen Additive
bestehen.

Bei den einzelnen Komponenten der erfindungsgemäßen Massen kann es sich jeweils um eine Art einer solchen Komponente wie auch um ein Gemisch aus mindestens zwei verschiedenen Arten derartiger Komponenten handeln.

Zur Bereitung der erfindungsgemäßen Massen können alle Bestandteile der jeweiligen Masse in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35°C bis 135°C.

Die Herstellung der erfindungsgemäßen Massen und deren Lagerung muß unter im wesentlichen wasserfreien Bedingungen erfolgen, da ansonsten die Massen vorzeitig aushärten können.

Für die Vernetzung der erfindungsgemäßen Massen zu Elastomeren reicht der übliche Wassergehalt der Luft aus. Die Vernetzung kann, falls erwünscht, auch bei höheren oder niedrigeren Temperaturen als Raumtemperatur, z.B. bei -5° bis 15°C oder bei 30° bis 50°C durchgeführt werden. Vorzugsweise wird die Vernetzung bei einem Druck von 100 bis 1100 hPa, insbesondere beim Druck der umgebenden Atmosphäre, durchgeführt.

Ein weiterer Gegenstand der vorliegenden Erfindung sind Formkörper, hergestellt durch Vernetzung der erfindungsgemäßen Massen.

Die erfindungsgemäßen vernetzbaren Massen haben den Vorteil, dass sie sich durch eine sehr hohe Lagerstabilität und eine hohe Vernetzungsgeschwindigkeit auszeichnen.

Des weiteren haben die erfindungsgemäßen Massen den Vorteil, dass durch den Einsatz der Organozinnverbindungen der Formel (I) farblose, transluzente Massen erhalten werden.

Die erfindungsgemäßen Massen können für alle Verwendungszwecke eingesetzt werden, für die unter Ausschluß von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasserund Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

Die Lagerstabilität der in den folgenden Beispielen hergestellten RTV-1-Alkoxymassen (= Compounds) wird anhand ihrer Vulkanisation zu elastischen Kautschuken als Funktion der Lagerzeit ermittelt. Die Alterung der Compounds wird durch die Lagerung bei 50°C bzw. 100°C beschleunigt.

### Beispiel 1

### Herstellung von Zinnkatalysator 1

40 g Tetra-n-butyldimethoxydistannoxan werden mit 16 g Dodecylbenzolsulfonsäure versetzt, wobei das entstehende Methanol im Vakuum entfernt wird. Es wird eine viskose, klare Verbindung erhalten. Das ¹¹⁹Sn-NMR-Spektrum zeigt nur ein zu -420 ppm hochfeldverschobenes Signal und damit eine vollständig erfolgte Umsetzung.

In einem Planetenmischer mit Vakuumausrüstung werden unter Wasserausschluss 55,4 Gew.-Teile eines Polydimethylsiloxans mit - OSi(OCH₃)₂(CH₃)-Endgruppen, das eine Viskosität von 80000 mPas besitzt, mit 31,2 Gew.-Teilen eines Polydimethylsiloxans mit - OSi(CH₃)₃-Endgruppen und einer Viskosität von 100 mPas sowie 4,0 Gew.-Teilen Methyltrimethoxysilan und 1,5 Gew.-Teilen 3-Aminopropyltrimethoxysilan vermischt. Dann werden 8,0 Gew.-Teile pyrogene Kieselsäure mit einer BET-Oberfläche von 150 m²/g (käuflich erhältlich bei Wacker-Chemie GmbH unter dem Handelsnamen "WACKER HDK® V15") eingemischt und zum Schluss 0,2 Gew.-Teile des oben beschriebenen Zinnkatalysators 1 zugegeben. Nach Homogenisieren im Vakuum wird der so erhaltene Compound in feuchtigkeitsdichte Gebinde abgefüllt und nach der in Tabelle 1 angegebenen Lagerzeit vernetzen gelassen. Dazu wird der so erhaltene Compound in einer 2 mm dicken Schicht auf eine PE-Folie aufgebracht und bei 23°C und 50% relativer Luftfeuchtigkeit stehen gelassen. Die Vulkanisation wird als gut beurteilt, wenn nach 24 Stunden die Masse durchvulkanisiert ist.

Die Ergebnisse über das Vulkanisationsverhalten finden sich in Tabelle 1.

### Beispiel 2

### Herstellung von Zinnkatalysator 2

Di-n-butylzinnoxid wird in Toluol mit 2 Moläquivalenten p-Toluolsulfonsäure-Monohydrat zum Rückfluss erhitzt und das Reaktionswasser azeotrop entfernt. Es wird ein farbloses Pulver erhalten.

Mit 0,2 Gew.-Teilen des so erhaltenen Zinnkatalysators 2 wird wie in Beispiel 1 beschrieben verfahren.

Die Ergebnisse über das Vulkanisationsverhalten finden sich in Tabelle 1.

### Beispiel 3

### Herstellung von Zinnkatalysator 3

Di-n-butylzinnoxid wird in Wasser/Methanol (1/1 v/v) mit 2 Moläquivalenten Dodecylbenzolsulfonsäure zum Rückfluss erhitzt und das Reaktionswasser mit Toluol azeotrop entfernt. Es wird ein farbloses Pulver erhalten.

Mit 0,2 Gew.-Teilen des so erhaltenen Zinnkatalysators 3 wird wie in Beispiel 1 beschrieben verfahren.

Die Ergebnisse über das Vulkanisationsverhalten finden sich in Tabelle 1.

### Beispiel 4

### Herstellung von Zinnkatalysator 4

40 g Tetra-n-butyldimethoxydistannoxan werden mit 4,8 g Amidosulfonsäure versetzt. Es wird eine farblose, klare Flüssigkeit erhalten.

Mit 0,2 Gew.-Teilen des so erhaltenen Zinnkatalysators 4 wird wie in Beispiel 1 beschrieben verfahren.

Die Ergebnisse über das Vulkanisationsverhalten finden sich in Tabelle 1.

### Vergleichsbeispiel 1

### Herstellung der Vergleichskomponente 1

9,5 g p-Toluolsulfonsäure werden mit 11 g Aminoethylaminopropyltrimethoxysilan gemischt, wobei sich das Gemisch stark erwärmt. Dann werden 40 g Tetra-n-butyldimethoxydistannoxan zugegeben. Der erhaltene Feststoff löst sich in Chloroform. Das ¹¹⁹Sn-NMR-Spektrum zeigt Signale für das Tetrabutyldimethoxydistannoxan bei -174 und -188 ppm.

Mit 0,2 Gew.-Teilen der so erhaltenen Vergleichskomponente 1 wird wie in Beispiel 1 beschrieben verfahren.

Die Ergebnisse über das Vulkanisationsverhalten finden sich in Tabelle 1.

### Vergleichsbeispiel 2

In einem Planetenmischer mit Vakuumausrüstung werden unter Wasserausschluss 55,4 Gew.-Teile eines Polydimethylsiloxans mit -OSi(OCH₃)₂(CH₃)-Endgruppen, das eine Viskosität von 80000 mPas besitzt, mit 31,2 Gew.-Teilen eines Polydimethylsiloxans mit - OSi(CH₃)₃-Endgruppen und einer Viskosität von 100 mPas sowie 4,0 Gew.-Teilen Methyltrimethoxysilan und 1,5 Gew.-Teilen 3-Aminopropyltrimethoxysilan vermischt. Dann werden 8,0 Gew.-Teile pyrogene Kieselsäure mit einer BET-Oberfläche von 150 m²/g (käuflich erhältlich bei Wacker-Chemie GmbH unter dem Handelsnamen "WACKER HDK® V15") eingemischt und zum Schluss 0,4 Gew.-Teile eines Zinnkatalysators (Vergleichskomponente 2), welcher durch Umsetzung von 4 Teilen Tetraethoxysilan mit 2,2 Teilen Dibutylzinndiacetat hergestellt wurde, zugegeben. Nach Homogenisieren im Vakuum wird der so erhaltene Compound in feuchtigkeitsdichte Gebinde abgefüllt und nach der in Tabelle 1 angegebenen Lagerzeit wie in Beispiel 1 beschrieben vernetzen gelassen.

Die Ergebnisse über das Vulkanisationsverhalten finden sich in Tabelle 1.

### Beispiel 5

In einem Planetenmischer mit Vakuumausrüstung werden unter Wasserausschluss 55,4 Gew.-Teile eines Polydimethylsiloxans mit - OSi(OCH₃)₂(CH₃)-Endgruppen, das eine Viskosität von 80000 mPas besitzt, mit 31,2 Gew.-Teilen eines Polydimethylsiloxans mit - OSi(CH₃)₃-Endgruppen und einer Viskosität von 100 mPas sowie 4,0 Gew.-Teilen Methyltrimethoxysilan und 0,2 Gew.-Teilen Tetra-n-butyldimethoxydistannoxan und 0,2 Gew.-Teilen Dodecylbenzolsulfonsäure vermischt und 10 Minuten gerührt. Dann werden 8,0 Gew.-Teile pyrogene Kieselsäure mit einer BET-Oberfläche von 150 m²/g (käuflich erhältlich bei Wacker-Chemie GmbH unter dem Handelsnamen "WACKER HDK® V15") eingemischt und zum Schluss 1,5 Gew.-Teile 3-Aminopropyltrimethoxysilan zugegeben. Nach Homogenisieren im Vakuum wird der so erhaltene Compound in feuchtigkeitsdichte Gebinde abgefüllt und nach der in Tabelle 1 angegebenen Lagerzeit wie in Beispiel 1 beschrieben vernetzen gelassen.

Die Ergebnisse über das Vulkanisationsverhalten finden sich in Tabelle 1.

### Vergleichsbeispiel 3

In einem Planetenmischer mit Vakuumausrüstung werden unter Wasserausschluss 55,4 Gew.-Teile eines Polydimethylsiloxans mit - OSi(OCH₃)₂(CH₃)-Endgruppen, das eine Viskosität von 80000 mPas besitzt, mit 31,2 Gew.-Teilen eines Polydimethylsiloxans mit - OSi(CH₃)₃-Endgruppen und einer Viskosität von 100 mPas sowie 4,0 Gew.-Teilen Methyltrimethoxysilan und 1,5 Gew.-Teilen 3-Aminopropyltrimethoxysilan vermischt. Dann werden 8,0 Gew.-Teile pyrogene Kieselsäure mit einer BET-Oberfläche von 150 m²/g (käuflich erhältlich bei Wacker-Chemie GmbH unter dem Handelsnamen "WACKER HDK® V15") eingemischt und zum Schluss 0,2 Gew.-Teile Tetra-n-butyldimethoxydistannoxan und 0,2 Gew.-Teile Dodecylbenzolsulfonsäure zugegeben. Nach Homogenisieren im Vakuum wird der so erhaltene Compound in feuchtigkeitsdichte Gebinde abgefüllt und nach der in Tabelle 1 angegebenen Lagerzeit wie in Beispiel 1 beschrieben vernetzen gelassen.

Die Ergebnisse über das Vulkanisationsverhalten finden sich in Tabelle 1.

### Vergleichsbeispiel 4

In einem Planetenmischer mit Vakuumausrüstung werden unter Wasserausschluss 55,4 Gew.-Teile eines Polydimethylsiloxans mit - OSi(OCH₃)₂(CH₃)-Endgruppen, das eine Viskosität von 80000 mPas besitzt, mit 31,2 Gew.-Teilen eines Polydimethylsiloxans mit - OSi(CH₃)₃-Endgruppen und einer Viskosität von 100 mPas sowie 4,0 Gew.-Teilen Methyltrimethoxysilan und 0,2 Gew.-Teilen Tetra-n-butyldimethoxydistannoxan und 0,2 Gew.-Teilen Dodecylbenzolsulfonsäure vermischt und 10 Minuten gerührt. Dann werden 8,0 Gew.-Teile pyrogene Kieselsäure mit einer BET-Oberfläche von 150 m²/g (käuflich erhältlich bei Wacker-Chemie GmbH unter dem Handelsnamen "WACKER HDK® V15") eingemischt. Nach Homogenisieren im Vakuum wird der so erhaltene Compound in feuchtigkeitsdichte Gebinde abgefüllt. Die so erhaltene Masse vulkanisiert nicht.

**Tabelle 1:**

| Beispiele | Katalysator | Vulkanisation nach 1 Tag bei 100°C | Vulkanisation nach 2 Wochen bei 50°C |
|---|---|---|---|
| Beispiel 1 | Katalysator 1 | gut | gut |
| Beispiel 2 | Katalysator 2 | gut | gut |
| Beispiel 3 | Katalysator 3 | gut | gut |
| Beispiel 4 | Katalysator 4 | gut | gut |
| Vergleichsbeispiel 1 | Vergleichskomponente 1 | keine | keine |
| Vergleichsbeispiel 2 | Vergleichskomponente 2 | keine | keine |
| Beispiel 5 | Butylstannoxan /Sulfonsäure | gut | gut |
| Vergleichsbeispiel 3 | Butylstannoxan /Sulfonsäure | keine | gut |

## Patentansprüche

1. Vernetzbare Massen auf der Basis von Organosiliciumverbindungen mit mindestens zwei hydrolysierbaren Gruppen, **dadurch gekennzeichnet, dass** als Katalysator mindestens eine Organozinnverbindung (C) enthaltend Einheiten der Formel
RₐR¹ _{b}(XR³)_{c}SnX_{(4-a-b-c)/2} (I)
sowie
basischen Stickstoff aufweisende Verbindungen (D)
enthalten ist, wobei
R gleich oder verschieden sein kann und einwertige, gegebenenfalls substituierte Kohlenwasserstoffreste, die durch Sauerstoffatome unterbrochen sein können, bedeutet,
X gleich oder verschieden sein kann und -O- oder -S- bedeutet, R¹ gleich oder verschieden sein kann und die Bedeutung von -OS(=O)₂R² hat,
R² gleich oder verschieden sein kann und über Stickstoff gebundene Aminreste, einwertige, gegebenenfalls substituierte Kohlenwasserstoffreste, die durch -S(=O)₂- unterbrochen sein können, oder Reste -OR⁴ mit R⁴ gleich der für R³ angegebenen Bedeutung ist,
R³ gleich oder verschieden sein kann und Wasserstoffatom oder einwertige, gegebenenfalls substituierte Kohlenwasserstoffreste, die durch Sauerstoffatome unterbrochen sein können, bedeutet,
a 0, 1, 2 oder 3 ist,
b 0, 1, 2 oder 3 ist,
c 0, 1, 2 oder 3 ist,
mit der Maßgabe, dass die Summe a+b+c<4 ist und die Organozinnverbindung mindestens einen Rest R¹ aufweist.

2. Massen gemäß Anspruch 1, **dadurch gekennzeichnet, dass** X in Formel (I) die Bedeutung von Sauerstoffatom hat.

3. Massen gemäß Anspruch 1 oder 2, **dadurch gekennzeichnet, dass** es sich bei den basischen Stickstoff aufweisenden Verbindungen (D) um solche ausgewählt aus der Gruppe bestehend aus Aminen, stickstoffhaltigen Heterocyclen oder aminofunktionellen Organosiliciumverbindungen handelt.

4. Massen gemäß einem oder mehreren der Ansprüche 1 bis 3, **dadurch gekennzeichnet, dass** es sich bei den basischen Stickstoff aufweisenden Verbindungen (D) um aminofunktionelle Organosiliciumverbindungen handelt.

5. Massen gemäß einem oder mehreren der Ansprüche 1 bis 4, **dadurch gekennzeichnet, dass** es sich bei den basischen Stickstoff aufweisenden Verbindungen (D) um Organosiliciumverbindungen der Formel
(R⁹O)_{4-g}SiR¹⁰ _{g} (IV)
handelt, wobei
R⁹ gleich oder verschieden sein kann und eine der oben für R³ angegebenen Bedeutungen hat,
R¹⁰ gleich oder verschieden sein kann und einwertige, basischen Stickstoff aufweisende, gegebenenfalls substituierte Kohlenwasserstoffreste bedeutet und
g 1, 2, 3 oder 4 ist,
sowie deren Teilhydrolysate.

6. Massen gemäß einem oder mehreren der Ansprüche 1 bis 5, **dadurch gekennzeichnet, dass** es sich bei den vernetzbaren Massen um solche handelt, die
(A) Organopolysiloxane mit mindestens zwei hydrolysierbaren Resten, ausgewählt aus Acetoxy-, Oximato- und Organyloxygruppen, gegebenenfalls
(B) Vernetzer mit mindestens drei hydrolysierbaren Resten, ausgewählt aus Acetoxy-, Oximato- und Organyloxygruppen, und/oder deren Teilhydrolysate,
(C) Organozinnverbindung enthaltend Einheiten der Formel (I) und
(D) basischen Stickstoff aufweisende Verbindungen (D) enthalten.

7. Massen gemäß einem oder mehreren der Ansprüche 1 bis 6, **dadurch gekennzeichnet, dass** es sich bei den vernetzbaren Massen um solche handelt, die
(A) Diorganopolysiloxan der Formel (II), gegebenenfalls
(B) Vernetzer der Formel (III) und/oder deren Teilhydrolysate,
(C) Organozinnverbindung enthaltend Einheiten der Formel (I) und
(D) basischen Stickstoff aufweisende Verbindung der Formel (IV)
enthalten.

8. Massen gemäß einem oder mehreren der Ansprüche 1 bis 7, **dadurch gekennzeichnet, dass** es sich bei den vernetzbaren Massen um solche handelt, die aus
(A) 100 Gewichtsteilen Polydiorganosiloxan der Formel (II),
(B) 0,01 bis 20 Gewichtsteilen Vernetzer der Formel (III) und/oder deren Teilhydrolysate,
(C) 0,05 bis 3 Gewichtsteilen Organozinnverbindung enthaltend Einheiten der Formel (I),
(D) 0,01 bis 4 Gewichtsteilen basischen Stickstoff aufweisende Verbindung der Formel (IV),
(E) 0 bis 300 Gewichtsteilen Weichmacher,
(F) 0 bis 300 Gewichtsteilen Füllstoffe,
(G) 0 bis 50 Gewichtsteilen Haftvermittler und
(H) 0 bis 100 Gewichtsteilen Additive
bestehen.

9. Formkörper, hergestellt durch Vernetzung der Massen gemäß einem oder mehreren der Ansprüche 1 bis 8.

## Claims

1. Vulcanizable materials based on organosilicon compounds with at least two hydrolysable groups, **characterized in that** at least one organotin compound (c) containing units of the formula
RₐR¹ _{b}(XR³)_{c}SnX_{(4-a-b-c)/2} (I)
and
compounds (D) containing basic nitrogen
are contained as a catalyst, where
R may be identical or different and is a monovalent, optionally substituted hydrocarbon radical which can be interrupted by oxygen atoms,
X may be identical or different and is -O- or -S-,
R¹ may be identical or different and has the meaning of -OS(=O)₂R²,
R² may be identical or different and is an amine radical bonded via nitrogen, a monovalent, optionally substituted hydrocarbon radical which may be interrupted by -S(=O)₂-, or a radical -OR⁴ with R⁴ having the meaning stated for R³,
R³ may be identical or different and is a hydrogen atom or a monovalent, optionally substituted hydrocarbon radical which may be interrupted by oxygen atoms,
a is 0, 1, 2 or 3,
b is 0, 1, 2 or 3,
c is 0, 1, 2 or 3,
with the proviso that the sum a+b+c is < 4 and the organotin compound has at least one radical R¹.

2. Materials according to Claim 1, **characterized in that** X in formula (I) is an oxygen atom.

3. Materials according to Claim 1 or 2, **characterized in that** the compounds (D) containing basic nitrogen are those selected from the group consisting of amines, nitrogen-containing heterocycles and amino-functional organosilicon compounds.

4. Materials according to one or more of Claims 1 to 3, **characterized in that** the compounds (D) containing basic nitrogen are amino-functional organosilicon compounds.

5. Materials according to one or more of Claims 1 to 4, **characterized in that** the compounds (D) containing basic nitrogen are organosilicon compounds of the formula
(R⁹O)_{4-g}SiR¹⁰ _{g} (IV),
in which
R⁹ may be identical or different and has one of the meanings stated above for R³,
R¹⁰ may be identical or different and is a monovalent, - optionally substituted hydrocarbon radical containing basic nitrogen and
g is 1, 2, 3 or 4,
and the partial hydrolysis products thereof.

6. Materials according to one or more of Claims 1 to 5, **characterized in that** the vulcanizable materials are ones which contain
(A) organopolysiloxanes having at least two hydrolysable radicals selected from acetoxy, oximato and organyloxy groups, optionally
(B) crosslinking agent having at least three hydrolysable radicals selected from acetoxy, oximato or organyloxy groups, and/or the partial hydrolysis products thereof,
(C) organotin compound containing units of the formula (I) and
(D) compounds (D) containing basic nitrogen.

7. Materials according to one or more of Claims 1 to 6, **characterized in that** the vulcanizable materials are ones which contain
(A) diorganopolysiloxane of the formula (II), optionally
(B) crosslinking agent of the formula (III) and/or partial hydrolysis products thereof,
(C) organotin compound containing units of the formula (I) and
(D) compound of the formula (IV) which contains basic nitrogen.

8. Materials according to one or more of Claims 1 to 7, **characterized in that** the vulcanizable materials are ones which consist of
(A) 100 parts by weight of polydiorganosiloxane of the formula (II),
(B) from 0.01 to 20 parts by weight of crosslinking agent of the formula (III) and/or partial hydrolysis products thereof,
(C) from 0.05 to 3 parts by weight of organotin compound containing units of the formula (I),
(D) from 0.01 to 4 parts by weight of compound of the formula (IV) which contains basic nitrogen,
(E) from 0 to 300 parts by weight of plasticizer,
(F) from 0 to 300 parts by weight of fillers,
(G) from 0 to 50 parts by weight of adhesion promoter and
(H) from 0 to 100 parts by weight of additives.

9. Mouldings produced by vulcanization of the materials according to one or more of Claims 1 to 8.

## Revendications

1. Masses réticulables à base de composés organosiliciés comprenant au moins deux groupements hydrolysables, **caractérisées en ce qu'**elles contiennent comme catalyseur au moins un composé organostannique (C) contenant des unités de formule
RₐR¹ _{b}(XR³)_{c}SnX_{(4-a-b-c)/2} (I)
ainsi que
des composés (D) présentant de l'azote basique, où R peut être identique ou différent et représente des radicaux hydrocarbonés monovalents, le cas échéant substitués, pouvant être interrompus par des atomes d'oxygène,
X peut être identique ou différent et signifie -O-ou -S-,
R¹ peut être identique ou différent et présente la signification -OS(=O)₂R²,
R² peut être identique ou différent et représente des radicaux amine liés par azote, des radicaux hydrocarbonés monovalents, le cas échéant substitués, qui peuvent être interrompus par - S(=O)₂- ou des radicaux -OR⁴ avec R⁴ ayant la signification indiquée pour R³,
R³ peut être identique ou différent et signifie un atome d'hydrogène ou des radicaux hydrocarbonés monovalents, le cas échéant substitués, qui peuvent être interrompus par des atomes d'oxygène,
a vaut 0, 1, 2 ou 3,
b vaut 0, 1, 2 ou 3,
c vaut 0, 1, 2 ou 3,
à condition que la somme a+b+c<4 et que le composé organostannique présente au moins un radical R¹.

2. Masses selon la revendication 1, **caractérisées en ce que** X dans la formule (I) signifie un atome d'oxygène.

3. Masses selon la revendication 1 ou 2, **caractérisées en ce qu'**il s'agit, pour les composés (D) présentant de l'azote basique, de composés choisis dans le groupe constitué par les amines, les hétérocycles contenant de l'azote ou les composés organosiliciés à fonctionnalité amino.

4. Masses selon l'une ou plusieurs des revendications 1 à 3, **caractérisées en ce qu'**il s'agit, pour les composés (D) présentant de l'azote basique, de composés organosiliciés à fonctionnalité amino.

5. Masses selon l'une ou plusieurs des revendications 1 à 4, **caractérisées en ce qu'**il s'agit, pour les composés (D) présentant de l'azote basique, de composés organosiliciés de formule
(R⁹O)_{4-g}SiR¹⁰ _{g} (IV)
où
R⁹ peut être identique ou différent et présente une des significations indiquées ci-dessus pour R³,
R¹⁰ peut être identique ou différent et signifie des radicaux hydrocarbonés monovalents présentant de l'azote basique, le cas échéant substitués et
g vaut 1, 2, 3 ou 4 ainsi que leurs hydrolysats partiels.

6. Masses selon l'une ou plusieurs des revendications 1 à 5, **caractérisées en ce qu'**il s'agit pour les masses réticulables de celles qui contiennent
(A) des organopolysiloxanes avec au moins deux radicaux hydrolysables, choisis parmi les groupements acétoxy, oximato et organyloxy, le cas échéant
(B) un réticulant comprenant au moins trois radicaux hydrolysables, choisi parmi les groupements acétoxy, oximato et organyloxy et/ou ses hydrolysats partiels,
(C) un composé organostannique contenant des unités de formule (I) et
(D) des composés (D) présentant de l'azote basique.

7. Masses selon l'une ou plusieurs des revendications 1 à 6, **caractérisées en ce qu'**il s'agit pour les masses réticulables de celles qui contiennent
(A) un diorganopolysiloxane de formule (II), le cas échéant
(B) un réticulant de formule (III) et/ou ses hydrolysats partiels,
(C) un composé organostannique contenant des unités de formule (I) et
(D) un composé présentant de l'azote basique de formule (IV).

8. Masses selon l'une ou plusieurs des revendications 1 à 7, **caractérisées en ce qu'**il s'agit pour les masses réticulables de celles qui sont constituées par
(A) 100 parties en poids de polydiorganosiloxane de formule (II),
(B) 0,01 à 20 parties en poids de réticulant de formule (III) et/ou ses hydrolysats partiels,
(C) 0,05 à 3 parties en poids de composé organostannique contenant des unités de formule (I),
(D) 0,01 à 4 parties en poids de composé présentant de l'azote basique de formule (IV),
(E) 0 à 300 parties en poids de plastifiant,
(F) 0 à 300 parties en poids de charges,
(G) 0 à 50 parties en poids de promoteur d'adhérence et
(H) 0 à 100 parties en poids d'additifs.

9. Corps façonnés, préparés par réticulation des masses selon l'une ou plusieurs des revendications 1 à 8.
